# EUROPEAN PATENT SPECIFICATION

(11) **EP 0 666 439 B1**
(45) Date of publication and mention of the grant of the patent: **18.11.1998**
(21) Application number: 94500021.4
(22) Date of filing: 07.02.1994
(51) Int. Cl.: F16K 5/06

(54) **Fluid flow valve**
Durchflussventil
Robinet d'écoulement de fluide

(43) Date of publication of application: 09.08.1995
(73) Proprietor: Lopez Carrion, Francisca, Bonrepos (Valencia) (ES); Cano Ballester, Julia, Valencia (ES)
(72) Inventor: Lopez Carrion, Francisca, Bonrepos (Valencia) (ES); Cano Ballester, Julia, Valencia (ES)
(74) Representative: Körner, Ekkehard, Dipl.-Ing.

(56) References cited:
- FR-A- 2 347 591
- US-A- 4 809 949

## Description

The present invention refers to a fluid flow valve comprising a housing having an axially extending inlet line and an outlet line extending transversely thereto, as set forth in the preamble of the claim. A fluid flow valve of this type of known from US -A-4 809 949.

The valve disclosed in the aforementioned document comprises a valve housing and a rotary valve plug. The valve housing has an inlet coaxial with the rotational axis of the valve plug and an outlet extending transversely thereto. Coaxial with the valve plug is a seal disposed in a groove of the valve plug to seal same with respect to the housing. Another seal is disposed between a fitting disposed in the outlet and the surface of a spherical portion of the valve plug to seal the fitting at the valve plug. A bent fluid passage extends through the spherical portion of the valve plug to enable a fluid connection between the inlet and the outlet. By rotating the valve plug, such connection may be interrupted, i.e. the valve closed.

From FR-A-2 347 591 a fluid valve having coaxially arranged inlet and outlet ports is known, having a rotor table valve body disposed in a passage connecting the inlet and the outlet ports. Various embodiments of valve bodies are disclosed in the document, which have in common that they comprise a straight passage for the fluid.

In valves of the kind disclosed in US 4 809 949, it has been shown in practice that this type of valve, in view of the spherical configuration of the valve body, does not perfectly fit the fluid outlet pipe, making the function of the seal provided there hard to fulfil, with the consequent light fluid leaks.

It is the object of the invention to overcome the aforementioned drawbacks.

This object is attained by the features comprised in the claim.

In the valve of the invention, the valve body is no longer spherical but substantially elongated relative to the axis of symmetry of the valve body, thereby achieving a perfect seal, so that the slightest fluid leak is avoided.

To facilitate the explanation, the present description is accompanied by a sheet of drawings, in which one embodiment is shown as an example of the invention.

In the drawings.
Figure 1 is a cross sectional view of an integral valve element,
Figure 2 is an elevational view of the valve element, and
Figure 3 is a cross sectional view of the valve element mounted in a valve housing.

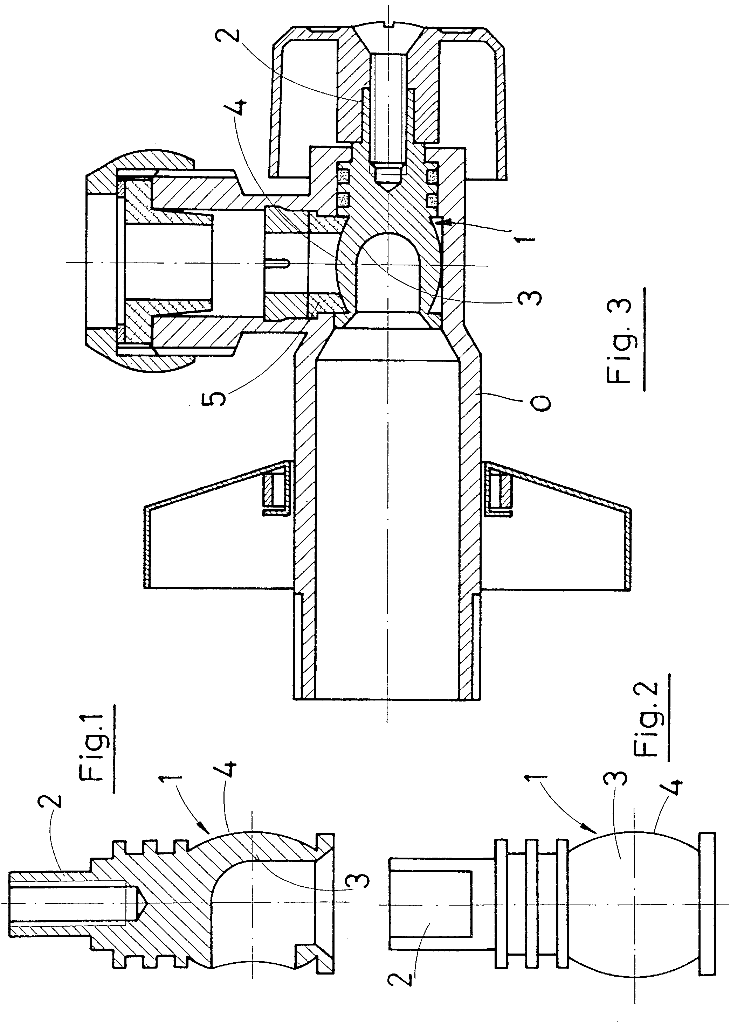

In the drawings as shown, a valve element 1 is integrally formed with a drive shaft 2 and a ball-like valve body 3 which, unlike conventional valves in which such valve bodies are perfectly spherical, is provided with a slightly elongated surface 4, the elongation being in the axis of symmetry of the valve element 1, whereby a prefect seating of a seal ring 5 (see Figure 3) is achieved, providing a perfect seal and avoiding that fluid leaks occur when the valve is used.

As may be seen from the drawings, the valve element 1 is disposed in a housing 0 which has an axially aligned inlet and an outlet being disposed transversely thereto, the seal ring 5 being disposed in said outlet. Thus, the valve body 3 has a bent fluid passage which, dependent on the rotational position of the valve element 1, connects inlet and outlet of the valve housing or disconnects same.

## Claims

1. A fluid flow valve comprising a housing (0) having an axially extending inlet line and an outlet line extending transversely thereto, a flow passage connecting said inlet and outlet lines, a valve element (1) rotatably mounted in said housing and being provided with a ball-like valve body (3) and a shaft (2), said shaft (2) extending coaxially with respect to said inlet line for operation of said valve, and a seal ring (5) having a spherical seal surface and being seated in the outlet line for sealing the ball-like surface (4) of said valve body (3) with respect to said housing, characterized in that said valve body (3) is formed substantially elongate relative to the axis of said shaft (2) so that the spherical seal surface of said seal ring (5) engages a non-spherical surface (4) of said valve body (3).

## Patentansprüche

1. Fluidströmungsventil, umfassend ein Gehäuse (0) mit einer sich axial erstreckenden Einlaßleitung und einer sich quer dazu erstreckenden Auslaßleitung, einen Strömungskanal, der die Einlaß- und Auslaßleitungen miteinander verbindet, ein Ventilelement (1), das in dem Gehäuse drehbar gelagert ist und mit einem kugelähnlichen Ventilkörper (3) und einem Schaft (2) versehen ist, wobei sich der Schaft (2) koaxial zur Einlaßleitung zur Betätigung des Ventils erstreckt, und einen Dichtungsring (5), der eine sphärische Dichtungsfläche aufweist und in der Auslaßleitung sitzt, um die kugelähnliche Oberfläche (4) des Ventilkörpers (3) an dem Gehäuse abzudichten, **dadurch gekennzeichnet**, daß der Ventilkörper (3) im wesentlichen länglich in der Achse des Schaftes (2) ausgebildet ist, so daß die sphärische Dichtungsfläche des Dichtungsrings (5) an einer nicht-sphärischen Oberfläche (4) des Ventilkörpers (3) anliegt.

## Revendications

1. Robinet d'écoulement de fluide comprenant un logement (0) possédant une conduite d'admission s'étendant dans le sens axial et une conduite d'évacuation s'étendant transversalement à celle-ci, un passage d'écoulement reliant lesdites conduites d'admission et d'évacuation, un élément de robinet (1) monté de manière rotative dans ledit logement et étant pourvu d'un corps de robinet de forme arrondie (3) et d'un arbre (2), ledit arbre (2) s'étendant de manière coaxiale par rapport à ladite conduite d'admission pour faire fonctionner ledit robinet, et une bague d'étanchéité (5) présentant une surface d'étanchéité sphérique et étant assise dans la conduite d'évacuation pour rendre hermétique la surface de forme sphérique (4) dudit corps de robinet (3) par rapport audit logement, caractérisé en ce que ledit corps de robinet (3) est formé sensiblement allongé par rapport à l'axe dudit arbre (2) de manière à ce que la surface d'étanchéité sphérique de ladite bague d'étanchéité (5) vienne en prise avec une surface non sphérique (4) dudit corps de robinet (3).
